# EUROPEAN PATENT SPECIFICATION

(11) **EP 2 963 528 B1**
(45) Date of publication and mention of the grant of the patent: **26.04.2017**
(21) Application number: 15174353.1
(22) Date of filing: 29.06.2015
(51) Int. Cl.: G06F 3/042

(54) **PROJECTOR DEVICE, INTERACTIVE SYSTEM, AND INTERACTIVE CONTROL METHOD**
PROJEKTORVORRICHTUNG, INTERAKTIVES SYSTEM UND INTERAKTIVES STEUERUNGSVERFAHREN
DISPOSITIF PROJECTEUR, SYSTÈME INTERACTIF ET PROCÉDÉ DE COMMANDE INTERACTIF

(30) Priority: 02.07.2014 JP 2014137201
(43) Date of publication of application: 06.01.2016
(73) Proprietor: Ricoh Company, Ltd., Tokyo 143-8555 (JP)
(72) Inventor: NAGAO, Masafumi, Tokyo, 143-8555 (JP)
(74) Representative: Maury, Richard Philip

(56) References cited:
- EP-A1- 2 026 170
- GB-A- 2 508 840

## Description

### BACKGROUND OF THE INVENTION

### 1. Field of the Invention

The present invention relates to a projector device, an interactive system, and an interactive control method.

### 2. Description of the Related Art

In recent years, there is known an interactive system that detects an operation on a screen projected by a projector device (an image projecting device) and enables the operation of a device, such as the projector device or a personal computer device. In the case of this interactive system, when a user operates a projection surface with an electronic pen, a pen, his/her finger, or the like, a cursor, a pointer, or the like on the projection surface is moved and displayed in accordance with the operation. Furthermore, in the case of this interactive system, when the user touches a desired position on the projection surface, the device is controlled, for example, to display an operation menu or to perform an operation corresponding to the touched position, such as switching of a display image.

Japanese Patent Application Laid-open No. 2012-185798 has disclosed an information processing system capable of accurately determining the timing at which a pointer has come in contact with a projection surface. This information processing system includes a coordinates detecting device for detecting coordinates on the projection surface, an information processing device for processing the detected coordinates, and a contact detecting device for detecting contact of the pointer with the projection surface.

The coordinates detecting device performs notification of approach of the pointer to the projection surface and detection of coordinates of an approaching position. When the contact detecting device has detected the approach of the pointer to the projection surface by notification of the approach of the pointer through the information processing device, the contact detecting device detects whether the pointer comes in contact with the projection surface within a given length of time. Then, when having detected contact of the pointer with the projection surface, the contact detecting device issues an event indicating the contact of the pointer. This makes it possible to determine the contact timing of the pointer with the projection surface accurately.

However, conventional interactive systems, including the technique disclosed in Japanese Patent Application Laid-open No. 2012-185798, have difficulty identifying multiple pointers at once. Therefore, there is a problem that when a projection surface is operated with multiple pointers, this constitutes an obstacle to the more accurate interactive operation.

In view of the above, there is a need to provide a projector device, an interactive system, and an interactive control method capable of the more accurate interactive operation in accordance with operations of multiple pointers.

GB 2508840A discloses a camera associated with a projector linked to a PC; the camera tracks multiple pointers as they are used on the projector screen by different users, and the system tracks their movement individually within a projected scene.

It is an object of the present invention to at least partially solve the problems in the conventional technology.

A projector device includes: a projecting unit that projects a projection image onto a projection surface; a receiving unit that receives information transmitted from a pointer operating the projection surface, the information including unique identification information of the pointer and first operation direction information indicating an operation direction of the pointer; a photographing unit that photographs the projection surface; a generating unit that generates second operation direction information indicating an operation direction of the pointer operating the projection surface from multiple photographed images taken by the photographing unit; an associating unit that associates the second operation direction information matching with the first operation direction information with the unique identification information; an operation-information generating unit that generates operation information including the associated unique identification information and second operation direction information; and a transmitting unit that transmits the generated operation information to a controlled device.

An interactive system includes: a projection-image generating unit that generates a projection image corresponding to operation information; a projecting unit that projects the generated projection image onto a projection surface; a receiving unit that receives information transmitted from a pointer operating the projection surface, the information including unique identification information of the pointer and first operation direction information indicating an operation direction of the pointer; a photographing unit that photographs the projection surface; a generating unit that generates second operation direction information indicating an operation direction of the pointer operating the projection surface from multiple photographed images taken by the photographing unit; an associating unit that associates the second operation direction information matching with the first operation direction information with the unique identification information; an operation-information generating unit that generates operation information including the associated unique identification information and second operation direction information; and a transmitting unit that transmits the generated operation information to the projection-image generating unit.

An interactive control method includes: generating, by a projection-image generating unit, a projection image corresponding to operation information; projecting, by a projecting unit, the generated projection image onto a projection surface; receiving, by a receiving unit, information transmitted from a pointer operating the projection surface of the projection image, the information including unique identification information of the pointer and first operation direction information indicating an operation direction of the pointer; photographing, by a photographing unit, the projection surface; generating, by a generating unit, second operation direction information indicating an operation direction of the pointer operating the projection surface from multiple photographed images taken; associating, by an associating unit, the second operation direction information matching with the first operation direction information with the unique identification information; generating, by an operation-information generating unit, operation information including the associated unique identification information and second operation direction information; and transmitting, by a transmitting unit, the generated operation information to the projection-image generating unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a system configuration diagram of an interactive system according to a first embodiment;
FIG. 2 is a hardware configuration diagram of a projector device installed in the interactive system according to the first embodiment;
FIG. 3 is a hardware configuration diagram of a pen used in the interactive system according to the first embodiment;
FIG. 4 is a functional block diagram of the projector device and the pen;
FIG. 5 is a sequence diagram showing the operations of devices in the interactive system according to the first embodiment;
FIG. 6 is a flowchart showing the operation of the projector device installed in the interactive system according to the first embodiment;
FIG. 7 is a flowchart showing the operation of a projector device installed in an interactive system according to a second embodiment; and
FIG. 8 is a flowchart showing the operation of a projector device installed in an interactive system according to a third embodiment.

### DETAILED DESCRIPTION OF THE PREFERRED EMBODIMENTS

Exemplary embodiments of an interactive system according to the present invention will be explained in detail below with reference to accompanying drawings.

### Outline

First, as the interactive system, for example, a "light-reflection type" interactive system or a "light-block type" interactive system can be adopted. In the case of the "light-reflection type" interactive system, an infrared device is installed above a projection surface onto which an image is projected by a projector device or the like, and the whole projection surface is photographed by a photographing unit (a camera unit). The infrared device projects an infrared light onto the whole projection surface. When a user operates the projection surface with a pointer such as a pen or his/her finger, the infrared light is reflected at the operated point. An operation detecting unit detects a position pointed by the pointer, a form of the user operation, or the like by using an image of the infrared light reflected on the projection surface photographed by the photographing unit.

On the other hand, in the case of the "light-block type" interactive system, a retroreflective sheet is installed on an outer frame of a projection surface. Furthermore, illumination units for emitting light to the whole projection surface are installed, for example, at the corners of the projection surface, and light receiving units receive light projected to the projection surface. Then, a position pointed by a pointer (a blocker) such as a pen or user's finger which blocks the light when operated on within the projection surface, a form of user operation, or the like is detected from angles regarding the pointer and the light receiving units.

The both "light-reflection type" and "light-block type" interactive systems detect the timing at which a pointer, such as a pen, has been irradiated with light as the timing at which the pointer has come in contact with the projection surface. However, it often happens that the timing at which a pointer has been irradiated with light is different from the timing at which the pointer has come in contact with the projection surface. If a user does not keep a pointer well away from the projection surface, the pointer is continuously irradiated with light, and the pointer is continuously recognized; therefore, the interactive operation may become inaccurate.

To prevent such disadvantage, a switch unit is installed at the tip of a pen used as a pointer, and the switch is designed to conduct electrical current when the tip of the pen has come in contact with the projection surface, in order to make the notification of the contact state of the pen tip with the projection surface wirelessly. Accordingly, it is possible to detect an operation position and detect a period of time in which the notification indicating the contact between the projection surface and the pen tip has been received as a period of time in which an operation has been performed with the pen in contact with the projection surface, thereby it is possible to perform the more accurate interactive control. Incidentally, according to this configuration, it is possible to identify a pen and a finger. That is, if notified of a contact state of a pointer with the projection surface when a position of the pointer was detected, an interactive system can identify the pointer as a pen; if not notified, the interactive system can identify the pointer as a finger (a pointer other than a pen).

Here, in the case where the projection surface is operated with multiple pointers, either type interactive system has difficulty identifying the pointers, and therefore has difficulty performing the accurate interactive control. For example, in the "light-reflection type" interactive system, when an operation has been performed by bringing a first pen into contact with the projection surface, an operation position of the first pen is detected by the photographing unit, and the first pen makes the notification of its own contact state. At this time, if the first pen makes the notification of unique identification information of the first pen together, the system side can recognize that a point of the detected operation position has been operated with the first pen. Also in the case where the same projection surface is operated with multiple pens, if the pens are operated to be brought into contact with the projection surface in turns, the pens can be identified from association between detected position and notification information, thereby it is possible to perform the more accurate interactive control.

However, in the case where an operation has been performed by bringing a first pen and a second pen into contact with the projection surface at the same time, respective operation positions of the first and second pens are detected by the photographing unit, and both the first and second pens make the notification of their own contact states. In this case, it is not possible to specify which pen's operation position the detected operation position is, and this may constitute an obstacle to the accurate interactive control.

In interactive systems according to the embodiments, a pen, an example of a pointer, notifies the system side of a unique identifier of the pen and a direction (an angle) detected by the pen. Then, the system side performs interactive control by comparing the direction in the notification from the pen with a direction calculated from position coordinates detected by the system side and associating the unique identifier of the pen with the operation position. Accordingly, even when multiple pens have come in contact with the projection surface at about the same time, it is possible to identify the pens and perform the more accurate interactive control.

### First Embodiment

### System Configuration

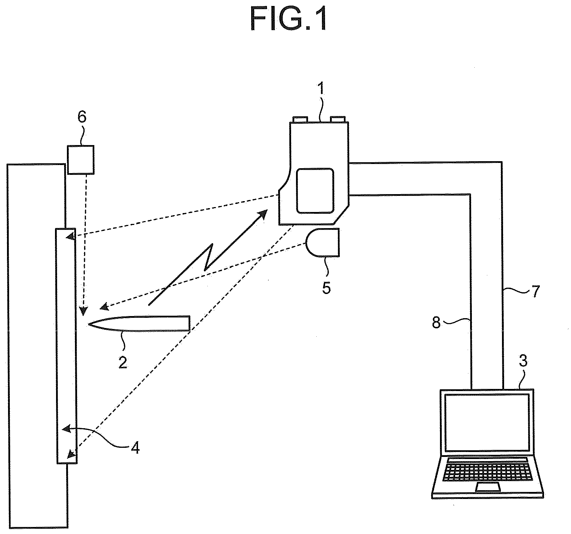

FIG. 1 shows a system configuration diagram of an interactive system according to a first embodiment. As an example, the interactive system according to the first embodiment includes a projector device 1, a pen 2, a personal computer device 3, a photographing unit 5, and a laser module 6. The projector device 1 and the personal computer device 3 are connected by a video cable 7 such as an HDMI™ cable for inputting an image. HDMI™ is an abbreviation of "High Definition Multimedia Interface". Furthermore, the projector device 1 and the personal computer device 3 are connected by a wired cable 8 such as a USB cable for transmitting and receiving operation information. USB is an abbreviation of "Universal Serial Bus". Incidentally, the projector device 1 and the personal computer device 3 may transmit and receive operation information by near field communication such as Bluetooth™.

The laser module 6 projects an infrared light parallel to a projection surface 4 at a little distance from the projection surface 4. The photographing unit (a camera unit) 5 photographs the infrared light projected to the projection surface 4. Therefore, the infrared light reflected by the pen 2 (or a finger), which is a pointer, is photographed by the photographing unit 5 (a light-reflection system). When a switch installed at the tip of the pen 2 has been pushed, the pen 2 transmits unique identification information (a pen identifier) and angle information to the projector device 1 wirelessly. The projector device 1 detects an operation position of the pen 2 on the projection surface 4 by using the photographed image taken by the photographing unit 5 and the pen identifier and angle information received from the pen 2, and converts the detected operation position into operation information, and then transmits the operation information to the personal computer device 3. Incidentally, the interactive system according to the first embodiment is an application example of a light-reflection type interactive system; however, other types of interactive systems, such as a light-block type, may be employed as well.

### Hardware Configuration of Projector Device

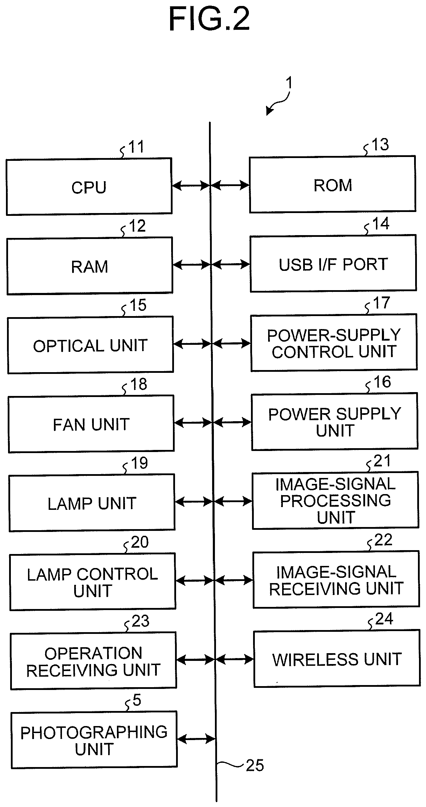

FIG. 2 is a hardware configuration diagram of the projector device 1. The projector device 1 includes a CPU 11, a RAM 12, a ROM 13, a USB I/F port 14, an optical unit 15, a power supply unit 16, a power-supply control unit 17, a fan unit 18, a lamp unit 19, and a lamp control unit 20. Furthermore, the projector device 1 includes an image-signal processing unit 21, an image-signal receiving unit 22, an operation receiving unit 23, a wireless unit 24, and the photographing unit 5. These components 11 to 24 and 5 are connected to one another via a bus line 25. Incidentally, in FIG. 2, the photographing unit 5 is integrated into the projector device 1; alternatively, the photographing unit 5 may be external to the projector device 1.

The CPU 11 executes an "interactive program for the projector device 1" for controlling the operation of the projector device 1. The RAM 12 constitutes a work area of the CPU 11 and the like. The ROM 13 stores therein the interactive program executed by the CPU 11 and data required for the execution of the interactive program. The USB I/F port 14 is a connection port of a USB cable. The optical unit 15 is a part that produces an image, and is a DMD™ or a color wheel if the projector device 1 is a DLP™ projector. DLP is an abbreviation of "Digital Light Processing". DMD is an abbreviation of "Digital Micromirror Device".

The power supply unit 16 supplies electric power to the projector device 1. The power-supply control unit 17 controls the power supply from the power supply unit 16. The fan unit 18 cools the main body of the projector device 1. The lamp unit 19 generates light as a light source. The lamp control unit 20 is ballast for controlling the lamp unit 19. The image-signal receiving unit 22 is an image signal port for each type of image input, such as D-subminiature (D-sub), HDMI™, or video. The image-signal processing unit 21 receives input of an image signal from an image signal port, and processes the image signal. The operation receiving unit 23 is, for example, an operation key, and receives a user operation. The wireless unit 24 performs, for example, infrared wireless communication or wireless communication which meets the Bluetooth™ communication standard, thereby receiving information from the pen 2. The photographing unit 5 is a camera device, and photographs the projection surface 4 as described above.

### Hardware Configuration of Pen

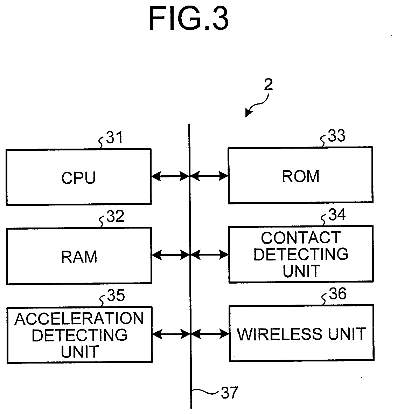

FIG. 3 is a hardware configuration diagram of the pen 2. As shown in FIG. 3, the pen 2 includes a CPU 31, a RAM 32, a ROM 33, a contact detecting unit 34, an acceleration detecting unit 35, and a wireless unit 36. These components 31 to 36 are connected to one another via a bus line 37. The CPU 31 executes an "interactive program for the pen 2" for controlling the operation of the pen 2. The RAM 32 constitutes a work area of the CPU 31 and the like. The ROM 33 stores therein the interactive program executed by the CPU 31 and data required for the execution of the interactive program. The contact detecting unit 34 is a sensor for detecting depression of the pen tip in contact with the projection surface 4. The acceleration detecting unit 35 is a sensor for detecting acceleration of the pen 2, an acceleration direction, and a tilt angle of the pen 2. The wireless unit 36 transmits a variety of information of the pen 2, such as a pen identifier, acceleration information, acceleration direction information, and tilt angle information, to the projector device 1 by, for example, infrared wireless communication or wireless communication which meets the Bluetooth™ communication standard.

### Functional Blocks of Projector Device and Pen

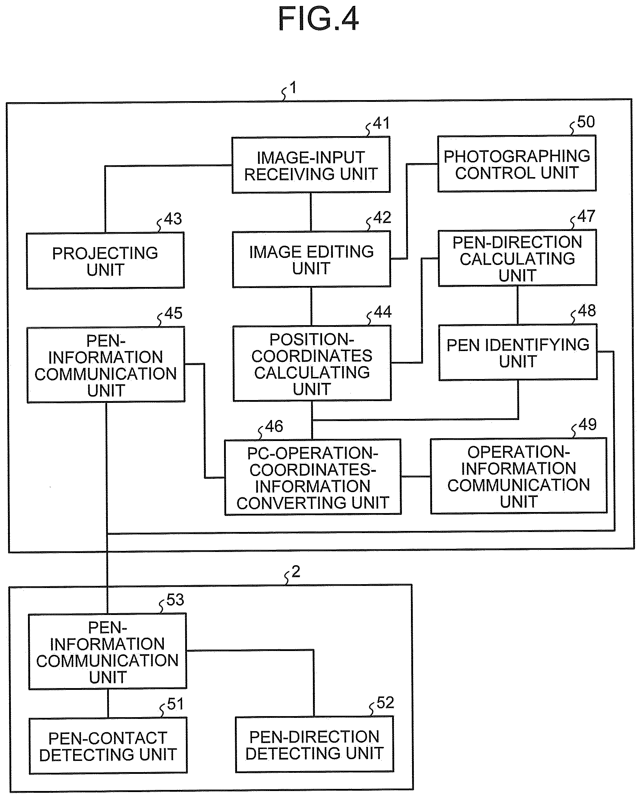

FIG. 4 is a functional block diagram of functions realized by the CPU 11 of the projector device 1 executing the interactive program for the projector device 1. Furthermore, FIG. 4 is a functional block diagram of functions realized by the CPU 31 of the pen 2 executing the interactive program for the pen 2. The functional block of the projector device 1 is composed of units 41 to 50. The functional block of the pen 2 is composed of a pen-contact detecting unit 51, a pen-direction detecting unit 52, and pen-information communication unit 53.

Incidentally, in this example, it will be assumed that the units 41 to 50 of the projector device 1 and the units 51 to 53 of the pen 2 are realized by software; however, all or some of the functions may be realized by hardware.

Furthermore, the respective interactive programs for the projector device 1 and the pen 2 may each be provided in such a manner that each interactive program is recorded on a computer-readable recording medium, such as a CD-ROM or a flexible disk (FD), in an installable or executable file format. Moreover, the interactive programs may be provided in such a manner that each interactive program is recorded on a computer-readable recording medium, such as a CD-R, a DVD, a Blu-ray Disc™, or a semiconductor memory. DVD is an abbreviation of "Digital Versatile Disk". Furthermore, the interactive programs may be provided in such a manner that each interactive program is installed via a network such as the Internet. Moreover, the interactive programs may each be built into a ROM or the like in a device in advance.

In FIG. 4, the projector device 1 includes an image-input receiving unit 41, an image editing unit 42, a projecting unit 43, a position-coordinates calculating unit 44, a pen-information communication unit 45, and a PC-operation-coordinates-information converting unit 46. Furthermore, the projector device 1 includes a pen-direction calculating unit 47, a pen identifying unit 48, an operation-information communication unit 49, and a photographing control unit 50. The position-coordinates calculating unit 44 is an example of a generating unit. The pen-information communication unit 45 is an example of a receiving unit. The PC-operation-coordinates-information converting unit 46 is an example of an operation-information generating unit. The operation-information communication unit 49 is an example of a transmitting unit. The photographing control unit 50 is an example of a photographing unit.

The image-input receiving unit 41 receives input of an image input via an HDMI™, a VGA, or a network. VGA is an abbreviation of "Video Graphics Array". The image editing unit 42 performs a process of editing an image to be projected, such as change of the magnification. The projecting unit 43 projects an image signal to the outside. The position-coordinates calculating unit 44 calculates position coordinates of a pen on a projection image from a photographed image of the projection surface 4. The pen-information communication unit 45 performs communication with the pen 2, and transmits and receives information to/from the pen 2. The PC-operation-coordinates-information converting unit 46 converts the calculated position coordinates and a pen identifier into operation coordinates information for the personal computer device 3, and transmits the operation coordinates information to the personal computer device 3 via the operation-information communication unit 49.

The pen-direction calculating unit 47 calculates an operation direction (an angle) of the pen 2 from the continuity of detected position coordinates. The pen identifying unit 48 identifies a pen 2 by comparing acceleration information of the pen 2 received from the pen 2 with an operation direction of the pen 2 calculated by the projector device 1. The operation-information communication unit 49 performs communication of operation information with the personal computer device 3. The photographing control unit 50 controls photographing by the photographing unit 5 that photographs the projection surface 4.

The pen-contact detecting unit 51 of the pen 2 detects whether the tip of the pen 2 is in contact with the projection surface 4. The pen-direction detecting unit 52 detects an operation direction of the pen 2. The pen-information communication unit 53 transmits and receives information to/from the projector device 1 through communication with the projector device 1.

### Inter-device Operation

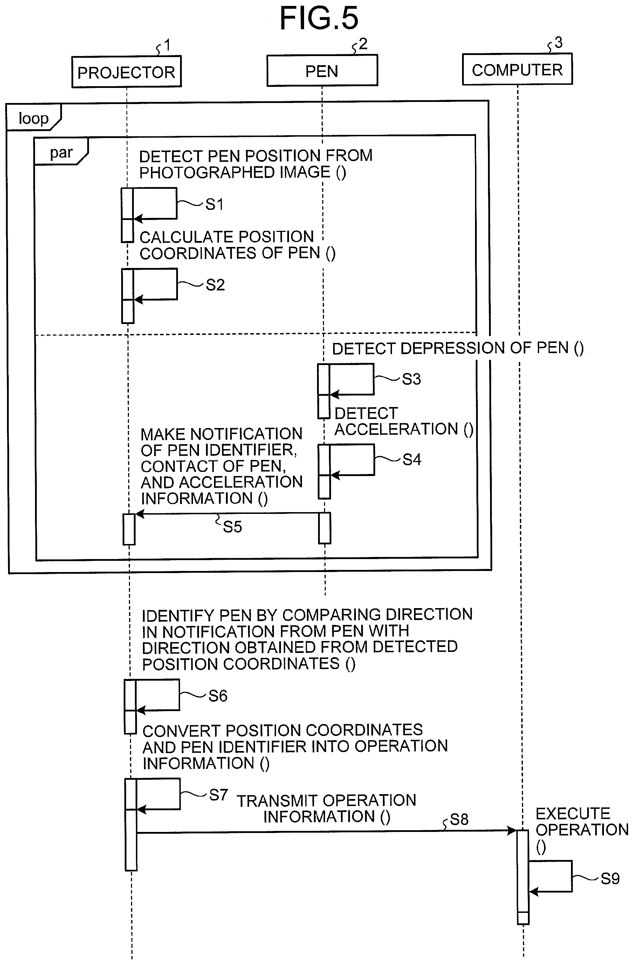

Subsequently, FIG. 5 is a sequence diagram showing the operations of devices when a contact operation has been performed on the projection surface 4. Steps S1 to S5 shown in FIG. 5 represent parallel processing (par). Furthermore, processes at Steps S1 to S5 are loop processing (loop) which is repeatedly performed at fixed intervals while the projection surface 4 is being operated with the pen 2 in contact with the projection surface 4.

That is, when the pen 2 has come in contact with the projection surface 4, in the projector device 1, a reflected light is detected in a photographed image from the photographing unit 5. At Step S1, the projector device 1 detects an operation position of the pen 2 by using the photographed image from the photographing unit 5. Furthermore, at Step S2, the projector device 1 calculates position coordinates corresponding to the operation position of the pen 2.

Next, at Step S3, the pen 2 detects whether the pen tip has come in contact with the projection surface 4, and generates contact detection information. Furthermore, at Step S4, the pen 2 detects acceleration of the pen 2 operated to move, and generates acceleration information. Then, at Step S5, the pen 2 transmits notification information, which includes the contact detection information, the acceleration information, and a pen identifier uniquely assigned to the pen 2, to the projector device 1. While the pen 2 is in contact with the projection surface 4, the projector device 1 and the pen 2 repeatedly perform the above-described processes at Steps S1 to S5 at fixed intervals.

Next, at Step S6, the projector device 1 calculates an operation direction of the pen 2 by using the position coordinates calculated at Step S2. For example, an inclination angle of the pen 2 when the projection surface 4 is seen two-dimensionally can be used as an operation direction of the pen 2. Furthermore, at Step S6, the projector device 1 calculates an operation direction of the pen 2 by using the acceleration information in the notification from the pen 2 at Step S5. Then, at Step S6, the projector device 1 compares the calculated operation directions of the pen 2.

If the operation direction calculated from the acceleration information in the notification from the pen 2 matches with the operation direction calculated from the position coordinates of the pen 2, it means that these operation directions are the operation direction of the same pen 2. Therefore, even when the projection surface 4 is operated with multiple pens 2 at the same time, position coordinates of each pen 2 detected at Step S2 can be associated with notification information (contact detection information, acceleration information, and a pen identifier) in the notification from the pen 2.

Next, at Step S7, the projector device 1 generates operation information for the personal computer device 3 from the detected position coordinates and the identifier of the pen 2. Then, at Step S8, the projector device 1 transmits the generated operation information to the personal computer device 3. At Step S9, the personal computer device 3 performs, for example, control of moving the display of a cursor, a scroll bar, a given object, or the like projected through the projector device 1 in accordance with the operation information received from the projector device 1. Furthermore, the personal computer device 3 performs, for example, control of switching the display screen, control of starting a specified application, or the like in accordance with the received operation information. Accordingly, even when the projection surface 4 is operated with multiple pens 2 at the same time, the operations of the pens 2 can be identified, and thereby it is possible to perform the more accurate interactive control.

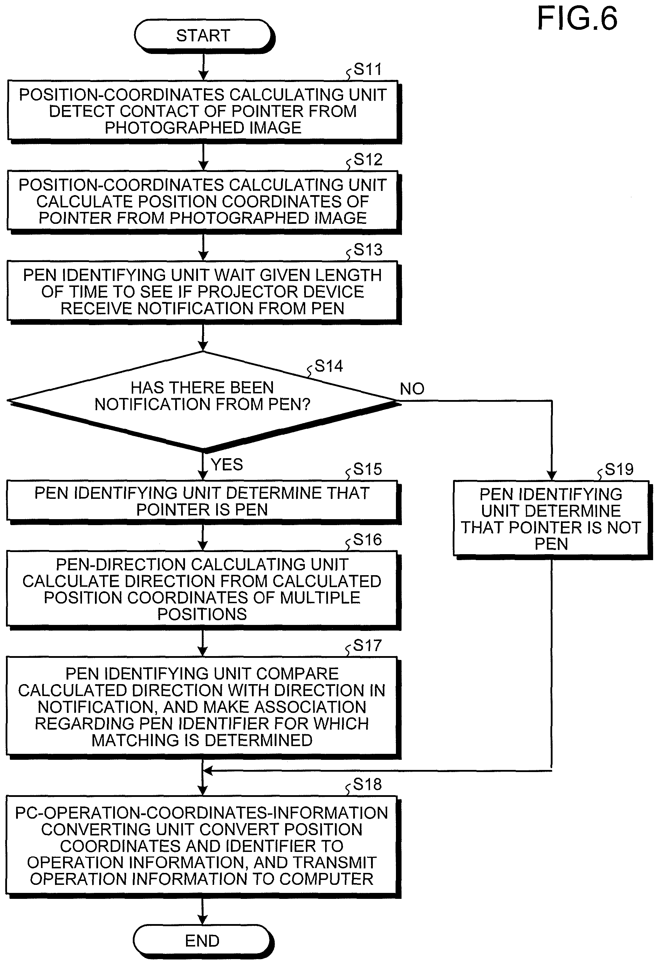

Subsequently, the flow of the interactive operation of the projector device 1 is shown in a flowchart of FIG. 6. At Step S11 in the flowchart of FIG. 6, when the projection surface 4 has been operated with a pointer such as the pen 2 or a finger, the position-coordinates calculating unit 44 shown in FIG. 4 detects contact of the pointer with the projection surface 4 from a photographed image taken by the photographing unit 5 in accordance with control by the photographing control unit 50. Then, at Step S12, the position-coordinates calculating unit 44 calculates position coordinates of the pointer (coordinates of a point pointed by the pen 2 or a finger) from the photographed image.

If the pointer currently operating the projection surface 4 is the pen 2, the notification of notification information is made by wireless communication. That is, when contact of the pen tip with the projection surface 4 has been detected by the pen-contact detecting unit 51 of the pen 2 shown in FIG. 4, the pen-direction detecting unit 52 detects acceleration generated by movement of the operated pen 2. Then, the pen-information communication unit 53 transmits notification information, which includes contact detection information, acceleration information, and unique identification information (a pen identifier) uniquely assigned to the pen 2, to the projector device 1. There is a time lag between the timing at which the notification information has been received from the pen 2 and the timing at which the position coordinates of the pointer has been detected by the projector device 1. Therefore, at Step S13, the pen identifying unit 48 waits a given length of time, such as 100 msec. Then, at Step S14, the pen identifying unit 48 determines whether notification information from the pen 2 is received while the pen identifying unit 48 was waiting the given length of time. When the projector device 1 has received notification information from the pen 2 (YES at Step S14), the processing proceeds to Step S15. On the other hand, when the projector device 1 has not received notification information from the pen 2 (NO at Step S14), the processing proceeds to Step S19.

At Step S19, the projector device 1 has not received notification information from the pen 2 within the waiting time, so the pen identifying unit 48 determines that the pointer is not the pen 2 but a pointer such as a finger which does not have a function of transmitting notification information. Then, at Step S18, the PC-operation-coordinates-information converting unit 46 generates operation information for the personal computer device 3 from an identifier of the pointer being the finger, and the calculated position coordinates of the finger, and transmits the generated operation information to the personal computer device 3, and the processing shown in the flowchart of FIG. 6 is terminated.

On the other hand, when the projector device 1 has received notification information from the pen 2 while the pen identifying unit 48 was waiting for the given length of time, the processing proceeds to Step S15, and at Step S15, the pen identifying unit 48 determines that the pen 2 is currently used as a pointer. At Step S16, the pen-direction calculating unit 47 calculates a direction (for example, an angle) of the pen 2 operated to move from position coordinates of multiple points each calculated using a photographed image in the past and present.

Next, at Step S17, the pen identifying unit 48 compares the operation direction of the pen 2 calculated from the photographed image with the operation direction of the pen 2 in the notification from the pen 2. When the both match with each other, the pen identifying unit 48 associates the pen identifier of the pen 2 included in the notification information with the position coordinates calculated from the photographed image. At Step S18, the PC-operation-coordinates-information converting unit 46 generates operation information for the personal computer device 3 from the pen identifier associated with the position information calculated from the photographed image. Then, the operation-information communication unit 49 transmits the generated operation information to the personal computer device 3. Then, the processing shown in the flowchart of FIG. 6 is terminated.

As is obvious from the above explanation, in the interactive system according to the first embodiment, the photographing unit 5 photographs the projection surface 4 onto which an image from the personal computer device 3 is being projected through the projecting unit 43 of the projector device 1. Then, the position-coordinates calculating unit 44 analyzes the photographed image, thereby calculating position coordinates of a pointer operating the projection surface 4.

The pen-contact detecting unit 51 of the pen 2 detects whether the pen tip has come in contact with the projection surface 4, and generates contact detection information. Furthermore, the pen 2 generates acceleration information depending on the operation state. Then, the pen 2 transmits notification information, which includes the contact detection information, the acceleration information, and unique identification information uniquely assigned to the pen 2, to the projector device 1.

The pen identifying unit 48 of the projector device 1 compares the operation direction of the pen 2 calculated from the photographed image with the operation direction (the acceleration information) of the pen 2 in the notification from the pen 2. When the both match with each other, the pen identifying unit 48 associates the unique identification information (a pen identifier) of the pen 2 included in the notification information with the position coordinates calculated from the photographed image.

The PC-operation-coordinates-information converting unit 46 generates operation information for the personal computer device 3 from the pen identifier associated with the position information calculated from the photographed image. The operation-information communication unit 49 transmits the generated operation information to the personal computer device 3. The personal computer device 3 performs, for example, control of moving the display of a cursor, scroll bar, given object, or the like projected through the projector device 1. Furthermore, the personal computer device 3 performs, for example, control of switching the display screen, control of starting a specified application, or the like in accordance with the received operation information. Accordingly, even when the projection surface 4 is operated with multiple pens 2 at the same time, the operations of the pens 2 can be identified, and thereby it is possible to perform the more accurate interactive control.

### Second Embodiment

Subsequently, an interactive system according to a second embodiment is explained. When the projection surface 4 is operated with one pen 2, an operation direction calculated from a photographed image is the operation direction of the pen 2. Therefore, when the projection surface 4 is operated with one pen 2, there is no need for the projector device 1 to perform the process of associating an operation direction calculated from a photographed image with unique identification information of the pen 2.

From this point of view, in the second embodiment, the above-mentioned associating process is performed when the projection surface 4 is operated with multiple pens 2. Incidentally, the second embodiment described below differs from the above-described first embodiment in this point only. Therefore, only a different part from the first embodiment is explained below to omit redundant description.

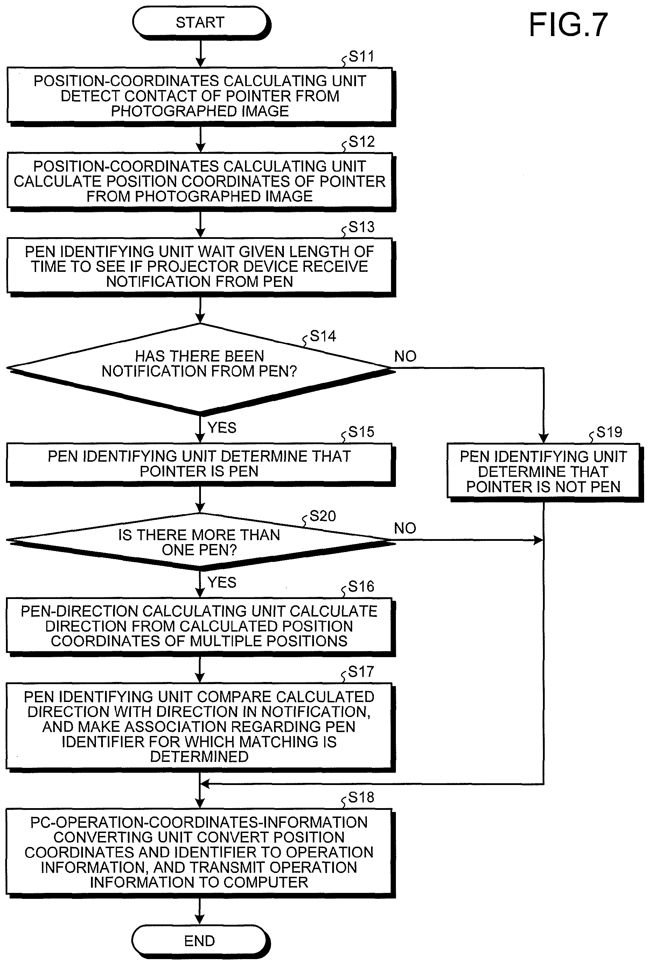

A flowchart of FIG. 7 shows the flow of the operation of the projector device 1 installed in the interactive system according to the second embodiment. In the case of the second embodiment, a process at Step S20 is further added in between Step S15 and Step S16 in the flowchart of FIG. 7; at Step S20, the pen identifying unit 48 determines whether there is more than one pen 2 operating the projection surface 4. At Step S20, when the pen identifying unit 48 has determined that there is more than one pen 2 operating the projection surface 4 (YES at Step S20), the processing proceeds to Step S16 at which, as described above, unique identification information of each pen 2 is associated with an operation direction of the pen 2 calculated from a projected image. Then, interactive control is performed in accordance with the operations of the pens 2.

On the other hand, at Step S20, when the pen identifying unit 48 has determined that there is a single (one) pen 2 operating the projection surface 4 (NO at Step S20), the processing proceeds to Step S18. That is, when the number of pens 2 operating the projection surface 4 is one, an operation direction calculated from a photographed image is the operation direction of the pen 2. Therefore, when the projection surface 4 is operated with one pen 2, there is no need for the projector device 1 to perform the process of associating an operation direction calculated from a photographed image with unique identification information of the pen 2. Therefore, when the pen identifying unit 48 has determined that there is a single (one) pen 2 operated on the projection surface 4 (NO at Step S20), the processing skips the associating process at Steps S16 and S17 and proceeds to Step S18. Then, the position coordinates of the pen 2 calculated from the photographed image is transmitted as operation information to the personal computer device 3, and interactive control is performed in accordance with the operation of the one pen 2.

In the case of the interactive system according to the second embodiment, when the number of pens 2 operated on the projection surface 4 is one, the process of associating an operation direction with a pen can be eliminated. Therefore, it is possible to reduce the arithmetic operation of the projector device 1, and yet possible to achieve the same effects as the first embodiment described above.

### Third Embodiment

Subsequently, an interactive system according to a third embodiment is explained. In the interactive system according to the third embodiment, the projector device 1 identifies a pointer operating the projection surface 4, and enables the interactive control. That is, in the case of the third embodiment, the projector device 1 identifies a pen 2 and a pointer such as a finger other than the pen 2, and enables the interactive control. Incidentally, the third embodiment described below differs from the above-described embodiments in this point only. Therefore, only a different part from the first and second embodiments is explained below to omit redundant description.

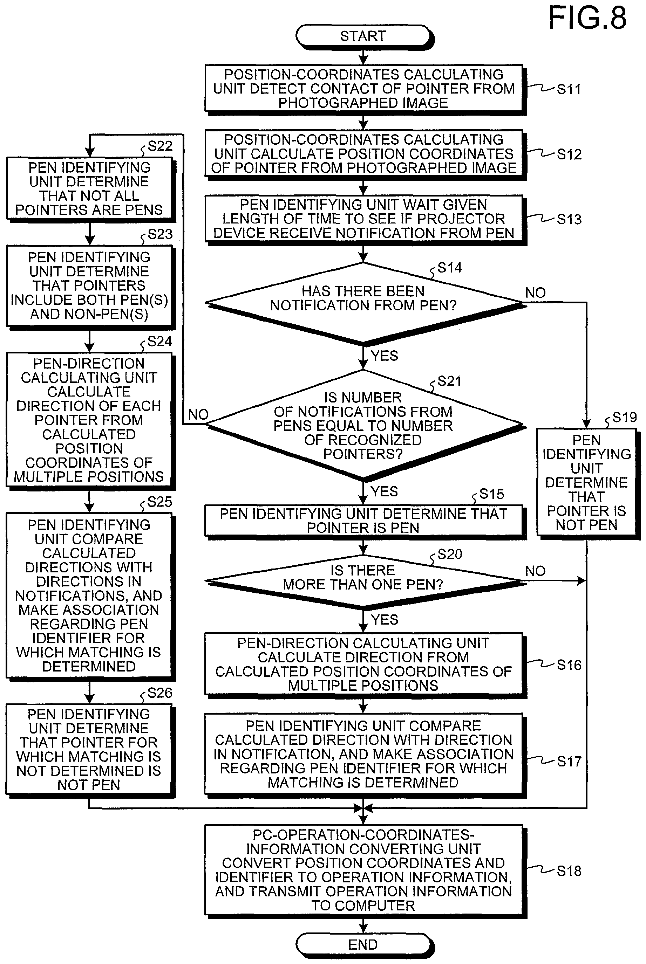

A flowchart of FIG. 8 shows the flow of the operation of the projector device 1 installed in the interactive system according to the third embodiment. In the case of the third embodiment, a process at Step S21 is further added in between Step S14 and Step S15 in the flowchart of FIG. 7. Furthermore, there are additional processes at Steps S22 to S26 which are performed if an answer is "NO" at Step S21.

At Step S14 in the flowchart of FIG. 8, when the projector device 1 has been notified of notification information from a pen 2, the processing proceeds to Step S21, and at Step S21, the pen identifying unit 48 detects the number of pens 2 which have transmitted notification information (the number of pieces of notification information in the notification) on the basis of unique identification information included in the notification information. Furthermore, at Step S21, the pen identifying unit 48 compares the number of detected pens 2 with the number of pointers detected in a photographed image.

When the pen identifying unit 48 has determined that the number of pens 2 detected from the number of pieces of notification information in the notification is equal to the number of pointers detected in a photographed image (YES at Step S21), the processing proceeds to Step S15, and at Step S15, interactive control is performed in accordance with the operation(s) of one or more pens 2 as explained in the first and second embodiments.

On the other hand, when the pen identifying unit 48 has determined that the number of pens 2 detected from the number of pieces of notification information in the notification is different from the number of pointers detected in a photographed image (NO at Step S21), the processing proceeds to Step S22. At Steps S22 and S23, the pen identifying unit 48 recognizes that the pointers detected in the photographed image include both pen(s) 2 having a function of making the notification of notification information and pointer(s) such as a finger not having the function of making the notification of notification information.

At Step S24, the pen-direction calculating unit 47 calculates an operation direction of each pointer from position coordinates of the pointer on multiple photographed images taken by the photographing unit 5. At Step S25, the pen identifying unit 48 detects a calculated operation direction matching with an operation direction included in the notification information received from the pen 2 (the operation direction in the notification) out of the operation directions calculated by the pen-direction calculating unit 47 (the calculated operation directions). Then, the pen identifying unit 48 associates the unique identification information of the pen 2 included in the notification information with the calculated operation direction matching with the operation direction in the notification. Furthermore, at Step S26, the pen identifying unit 48 recognizes that out of the calculated operation directions calculated by the pen-direction calculating unit 47, a calculated operation direction matching with no operation direction in the notification from the pen 2 is an operation direction of a pointer such as a finger not having the function of making the notification of notification information. In other words, the pen identifying unit 48 recognizes that a calculated operation direction with which there is no unique identification information associated is an operation direction of a pointer such as a finger.

At Step S18, the calculated operation direction associated with the unique identification information of the pen 2 and the calculated operation direction recognized to be an operation direction of a pointer such as a finger not having the function of making the notification of notification information (=the calculated operation direction with which there is no unique identification information associated) are converted into operation information for the personal computer device 3 by the PC-operation-coordinates-information converting unit 46. Then, the operation information is transmitted to the personal computer device 3 by the operation-information communication unit 49, and used for the interactive control.

Even when there are mixed pointers of pen(s) 2 having a function of transmitting notification information and pointer(s) such as a finger not having the function of transmitting notification information, the interactive system according to the third embodiment can distinguish and detect respective operations of the pointers accurately, and can achieve the same effects as the embodiments described above.

According to an embodiment, it is possible to perform more accurate interactive control in accordance with operations of multiple pointers.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A projector device (1) comprising:
a projecting unit (43) configured to project a projection image onto a projection surface (4);
a receiving unit configured to receive information transmitted from a pointer (2) operating on the projection surface, the information including unique identification information of the pointer and first operation direction information indicating an operation direction of the pointer;
a photographing unit (5) configured to photograph the projection surface;
a generating unit configured to generate second operation direction information indicating an operation direction of the pointer operating the projection surface from multiple photographed images taken by the photographing unit;
an associating unit configured to associate the second operation direction information matching with the first operation direction information with the unique identification information;
an operation-information generating unit (46) configured to generate operation information including the associated unique identification information and second operation direction information; and
a transmitting unit (49) configured to transmit the generated operation information to a controlled device.

2. The projector device (1) according to clam 1, further comprising a pointer-number detecting unit configured to detect the number of pointers operated on the projection surface from a photographed image taken by the photographing unit (5), wherein
when the number of detected pointers is one, the associating unit stops association processing, and
when the number of detected pointers is one, the operation-information generating unit generates operation information including unique identification information of the pointer received by the receiving unit and the second operation direction information generated by the generating unit.

3. The projector device (1) according to claim 1 or 2, further comprising:
a first number detecting unit configured to detect the number of pieces of different unique identification information out of received unique identification information as the number of pointers operated on the projection surface; and
a second number detecting unit configured to detect the number of pointers from a photographed image taken by the photographing unit, wherein
when the number of pointers detected by the first number detecting unit is different from the number of pointers detected by the second number detecting unit, the associating unit associates a piece of the second operation direction information matching with a piece of the first operation direction information out of pieces of the second operation direction information detected by the generating unit with unique identification information received together with the piece of the first operation direction information, and
the operation-information generating unit generates operation information including the associated unique identification information and second operation direction information, and generates operation information including second operation direction information with which there is no unique identification information associated.

4. An interactive system comprising:
a projection-image generating unit (3) configured to generate a projection image corresponding to operation information;
and a projector device (1) according to any one of claims 1 to 3,
wherein the transmitting unit (49) is configured to transmit the generated operation information to the projection-image generating unit.

5. An interactive control method comprising:
generating, by a projection-image generating unit, a projection image corresponding to operation information;
projecting, by a projecting unit (43), the generated projection image onto a projection surface (4);
receiving, by a receiving unit, information transmitted from a pointer (2) operating the projection surface of the projection image, the information including unique identification information of the pointer and first operation direction information indicating an operation direction of the pointer;
photographing, by a photographing unit (5), the projection surface;
generating, by a generating unit, second operation direction information indicating an operation direction of the pointer operating the projection surface from multiple photographed images taken;
associating, by an associating unit, the second operation direction information matching with the first operation direction information with the unique identification information;
generating, by an operation-information generating unit (46), operation information including the associated unique identification information and second operation direction information; and
transmitting, by a transmitting unit (49), the generated operation information to the projection-image generating unit.

## Patentansprüche

1. Projektorvorrichtung (1), umfassend:
eine Projiziereinheit (43), die dafür konfiguriert ist, ein Projektionsbild auf eine Projektionsoberfläche (4) zu projizieren;
eine Empfangseinheit, die dafür konfiguriert ist, Information zu empfangen, die von einem auf der Projektionsoberfläche operierenden Zeiger (2) übertragen wird, wobei die Information eindeutige Identifizierungsinformation des Zeigers und erste Operationsrichtungsinformation, die eine Operationsrichtung des Zeigers angibt, aufweist;
eine Fotografiereinheit (5), die dafür konfiguriert ist, die Projektionsoberfläche zu fotografieren;
eine Erzeugungseinheit, die dafür konfiguriert ist, zweite Operationsrichtungsinformation, die eine Operationsrichtung des auf der Projektionsoberfläche operierenden Zeigers angibt, aus mehreren durch die Fotografiereinheit aufgenommenen fotografierten Bildern zu erzeugen;
eine Assoziiereinheit, die dafür konfiguriert ist, die mit der ersten Operationsrichtungsinformation übereinstimmende zweite Operationsrichtungsinformation mit der eindeutigen Identifizierungsinformation zu assoziieren;
eine Operationsinformationserzeugungseinheit (46), die dafür konfiguriert ist, Operationsinformation zu erzeugen, welche die assoziierte eindeutige Identifizierungsinformation und zweite Operationsrichtungsinformation aufweist; und
eine Übertragungseinheit (49), die dafür konfiguriert ist, die erzeugte Operationsinformation zu einer gesteuerten Vorrichtung zu übertragen.

2. Projektorvorrichtung (1) nach Anspruch 1, ferner eine Zeigeranzahlermittlungseinheit umfassend, die dafür konfiguriert ist, die Anzahl der auf der Projektionsoberfläche betriebenen Zeiger aus einem durch die Fotografiereinheit (5) aufgenommenen fotografierten Bild zu ermitteln, worin:
wenn die Anzahl der ermittelten Zeiger eins ist, die Assoziiereinheit die Assoziationsverarbeitung beendet, und
wenn die Anzahl der ermittelten Zeiger eins ist, die Operationsinformationserzeugungseinheit Operationsinformation erzeugt, welche durch die Empfangseinheit empfangene eindeutige Identifizierungsinformation des Zeigers und die durch die Erzeugungseinheit erzeugte zweite Operationsrichtungsinformation aufweist.

3. Projektorvorrichtung (1) nach Anspruch 1 oder 2, ferner umfassend:
eine erste Anzahlermittlungseinheit, die dafür konfiguriert ist, die Anzahl der Stücke unterschiedlicher eindeutiger Identifizierungsinformation aus empfangener eindeutiger Identifizierungsinformation als die Anzahl der auf der Projektionsoberfläche betriebenen Zeiger zu ermitteln; und
eine zweite Anzahlermittlungseinheit, die dafür konfiguriert ist, die Anzahl der Zeiger aus einem durch die Fotografiereinheit aufgenommenen fotografierten Bild zu ermitteln, worin:
wenn die durch die erste Anzahlermittlungseinheit ermittelte Anzahl der Zeiger sich von der durch die zweite Anzahlermittlungseinheit ermittelten Anzahl der Zeiger unterscheidet, die Assoziiereinheit ein mit einem Stück der ersten Operationsrichtungsinformation übereinstimmendes Stück der zweiten Operationsrichtungsinformation aus durch die Erzeugungseinheit ermittelten Stücken der zweiten Operationsrichtungsinformation mit eindeutiger Identifizierungsinformation assoziiert, die zusammen mit dem Stück der ersten Operationsrichtungsinformation empfangen wurde, und
die Operationsinformationserzeugungseinheit Operationsinformation erzeugt, welche die assoziierte eindeutige Identifizierungsinformation und zweite Operationsrichtungsinformation aufweist, und Operationsinformation erzeugt, welche zweite Operationsrichtungsinformation aufweist, mit der keine eindeutige Identifizierungsinformation assoziiert ist.

4. Interaktives System, umfassend:
eine Projektionsbilderzeugungseinheit (3), die dafür konfiguriert ist, ein Projektionsbild zu erzeugen, das Operationsinformation entspricht;
und eine Projektorvorrichtung (1) nach einem der Ansprüche 1 bis 3,
worin die Übertragungseinheit (49) dafür konfiguriert ist, die erzeugte Operationsinformation zu der Projektionsbilderzeugungseinheit zu übertragen.

5. Interaktives Steuerungsverfahren, umfassend:
durch eine Projektionsbilderzeugungseinheit erfolgendes Erzeugen eines Projektionsbildes, das Operationsinformation entspricht;
durch eine Projiziereinheit (43) erfolgendes Projizieren des erzeugten Projektionsbildes auf eine Projektionsoberfläche (4);
durch eine Empfangseinheit erfolgendes Empfangen von Information, die von einem auf der Projektionsoberfläche des Projektionsbildes operierenden Zeiger (2) übertragen wird, wobei die Information eindeutige Identifizierungsinformation des Zeigers und erste Operationsrichtungsinformation, die eine Operationsrichtung des Zeigers angibt, aufweist;
durch eine Fotografiereinheit (5) erfolgendes Fotografieren der Proj ektionsoberfläche;
durch eine Erzeugungseinheit erfolgendes Erzeugen zweiter Operationsrichtungsinformation, die eine Operationsrichtung des auf der Projektionsoberfläche operierenden Zeigers angibt, aus mehreren aufgenommenen fotografierten Bildern;
durch eine Assoziiereinheit erfolgendes Assoziieren der mit der ersten Operationsrichtungsinformation übereinstimmenden zweiten Operationsrichtungsinformation mit der eindeutigen Identifizierungsinformation;
durch eine Operationsinformationserzeugungseinheit (46) erfolgendes Erzeugen von Operationsinformation, welche die assoziierte eindeutige Identifizierungsinformation und zweite Operationsrichtungsinformation aufweist; und
durch eine Übertragungseinheit (49) erfolgendes Übertragen der erzeugten Operationsinformation zu der Projektionsbilderzeugungseinheit.

## Revendications

1. Dispositif de projection (1) comprenant :
une unité de projection (43) configurée pour projeter une image de projection sur une surface de projection (4) ;
une unité de réception configurée pour recevoir des informations transmises par un pointeur (2) agissant sur la surface de projection, les informations comprenant des informations d'identification unique du pointeur et des premières informations de direction d'opération indiquant une direction d'opération du pointeur ;
une unité de photographie (5) configurée pour photographier la surface de projection ;
une unité de génération configurée pour générer des deuxièmes informations de direction d'opération indiquant une direction d'opération du pointeur agissant sur la surface de projection à partir de multiples images photographiées prises par l'unité de photographie ;
une unité d'association configurée pour associer les deuxièmes informations de direction d'opération correspondant aux premières informations de direction d'opération avec les informations d'identification unique ;
une unité de génération d'informations d'opération (46) configurée pour générer des informations d'opération comprenant les informations d'identification unique et les deuxièmes informations de direction d'opération associées ; et
une unité de transmission (49) configurée pour transmettre les informations d'opération générées à un dispositif commandé.

2. Dispositif de projection (1) selon la revendication 1, comprenant en outre une unité de détection de nombre de pointeurs configurée pour détecter le nombre de pointeurs agissant sur la surface de projection à partir d'une image photographiée prise par l'unité de photographie (5), dans lequel
lorsque le nombre de pointeurs détectés est égal à un, l'unité d'association arrête le traitement d'association, et
lorsque le nombre de pointeurs détectés est égal à un, l'unité de génération d'informations d'opération génère des informations d'opération comprenant les informations d'identification unique du pointeur reçues par l'unité de réception et les deuxièmes informations de direction d'opération générées par l'unité de génération.

3. Dispositif de projection (1) selon la revendication 1 ou 2, comprenant en outre :
une première unité de détection de nombre configurée pour détecter le nombre d'éléments d'informations d'identification unique différents parmi les informations d'identification unique reçues en tant que nombre de pointeurs agissant sur la surface de projection ; et
une deuxième unité de détection de nombre configurée pour détecter le nombre de pointeurs à partir d'une image photographiée prise par l'unité de photographie, dans lequel
lorsque le nombre de pointeurs détecté par la première unité de détection de nombre est différent du nombre de pointeurs détecté par la deuxième unité de détection de nombre, l'unité d'association associe un élément des deuxièmes informations de direction d'opération correspondant à un élément des premières informations de direction d'opération parmi les éléments des deuxièmes informations de direction d'opération détectées par l'unité de génération avec les informations d'identification unique reçues avec l'élément des premières informations de direction d'opération, et
l'unité de génération d'informations d'opération génère des informations d'opération comprenant les informations d'identification unique et les deuxièmes informations de direction d'opération associées, et génère des informations d'opération comprenant les deuxièmes informations de direction d'opération avec lesquelles aucune information d'identification unique n'est associée.

4. Système interactif comprenant :
une unité de génération d'image de projection (3) configurée pour générer une image de projection correspondant à des informations d'opération ; et
un dispositif de projection (1) selon l'une quelconque des revendications 1 à 3,
dans lequel l'unité de transmission (49) est configurée pour transmettre les informations d'opération générées à l'unité de génération d'image de projection.

5. Procédé de commande interactive comprenant :
la génération, par une unité de génération d'image de projection, d'une image de projection correspondant à des informations d'opération ;
la projection, par une unité de projection (43), de l'image de projection générée sur une surface de projection (4) ;
la réception, par une unité de réception, des informations transmises par un pointeur (2) agissant sur la surface de projection de l'image de projection, les informations comprenant des informations d'identification unique du pointeur et des premières informations de direction d'opération indiquant une direction d'opération du pointeur ;
la photographie, par une unité de photographie (5), de la surface de projection ;
la génération, par une unité de génération, de deuxièmes informations de direction d'opération indiquant une direction d'opération du pointeur agissant sur la surface de projection à partir de multiples images photographiées prises ;
l'association, par une unité d'association, des deuxièmes informations de direction d'opération correspondant aux premières informations de direction d'opération avec les informations d'identification unique ;
la génération, par une unité de génération d'informations d'opération (46), d'informations d'opération comprenant les informations d'identification unique et les deuxièmes informations de direction d'opération associées ; et
la transmission, par une unité de transmission (49), des informations d'opération générées à l'unité de génération d'image de projection.
